(19) **Europäisches Patentamt / European Patent Office / Office européen des brevets**

(11) **EP 4 009 023 A1**

(12) # EUROPEAN PATENT APPLICATION

(43) Date of publication:
**08.06.2022 Bulletin 2022/23**

(21) Application number: **20211680.2**

(22) Date of filing: **03.12.2020**

(51) International Patent Classification (IPC):
**G01K 1/143** (2021.01)    **G01K 7/42** (2006.01)
**G01K 13/02** (2021.01)    **G01K 15/00** (2006.01)
**G06F 30/20** (2020.01)

(52) Cooperative Patent Classification (CPC):
**G01K 15/007; G01K 1/143; G01K 7/42;
G01K 13/02; G06F 30/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB Schweiz AG
5400 Baden (CH)**

(72) Inventors:
• **GEBHARDT, Joerg
55130 Mainz (DE)**
• **SOSALE, Guruprasad
80997 München (DE)**

• **DAAKE, Wilhelm
32469 Petershagen (DE)**
• **SCHROEDER, Karsten
32469 Petershagen (DE)**
• **NEUMANN, Kai-Jan
64291 Darmstadt (DE)**
• **BRYK, Andrzej
30-079 Kraków (PL)**
• **PODOLSKA, Magdalena
32-086 Wegrzce, Lesserpoland (PL)**
• **KERN, Matthias
32425 Minden (DE)**

(74) Representative: **Maiwald Patent- und
Rechtsanwaltsgesellschaft mbH
Elisenhof
Elisenstraße 3
80335 München (DE)**

(54) ## METHOD FOR SIMULATION OF A DETERMINATION OF A TEMPERATURE OF A MEDIUM

(57)    A method for simulation a determination of a temperature of a medium based on a non-invasive temperature sensor system is described, wherein the non-invasive temperature sensor system is located at an outside surface of a vessel wall surrounding the medium, the method comprising:

providing a set of first parameters of the medium and the vessel;

providing a set of second parameters of the medium and the vessel;

providing a temperature of the medium;

simulating the determination of a calculated temperature of the medium based on the first set of parameters and the second set of parameters and the temperature of the medium; and outputting the calculated temperature of the medium.

Fig. 4

EP 4 009 023 A1

## Description

Background

Measurement of process parameters such as temperature, pressure etc. are all typically carried out by sensors systems. The measurement readings of these sensor systems are typically used to control or monitor a process involving a medium.

To ensure that the sensor systems accurately measure the parameters of the medium and accurately monitor changes of the state of the process, they are usually installed in intimate contact with the process medium.

There are state of the art sensor systems, often called non-invasive, that are mounted onto industrial vessels including sensor systems that can be used to infer process parameters without the need for direct contact with the medium, or at least without the need to break a wall of the process vessel or pipe for the installation, e.g. via drilling and perhaps subsequent welding. Devices such as ultrasonic flow sensors, surface mounted temperature sensors accurately measure properties of the medium. Temperature measurements are vital for safe running of facilities, because the temperature being the main control parameter for ensuring quality or efficiency of the process. Small deviations in temperature can lead to immense differences in energy or transactional costs given the volume of flow or material per second.

These sensors often require some basic properties of the process medium like density, viscosity, speed of sound, temperature and pressure range of the medium to be able to determine the property and/or to compensate for errors and get an accurate measurement. This is usually done during installation of the sensor system.

Description

For a decision of choosing a specific sensor system for a specific process control the sensor system typically needs to be proved for similar tasks to reduce effort and cost associated with testing a new sensor system for a specific process control, because there is no easy way to predict or judge the effect of process changes to the performance of the sensor system.

What is lacking is an engineering tool to predict the performance of a non-invasive sensor system, to overcome the scalability task of having to validate every individual application for the sensor, for instance by testing the sensor system in comparison to an invasive sensor system counterpart for a specific application.

Upfront engineering calculations to predict the feasibility of a specific sensor system can be cumbersome and a certain amount of creativity is required to limit the required number of input parameters and circumstances to predict a performance of a specific sensor system for specific process control.

Aspects of the present invention are related to a method for simulation a determination of a temperature of a medium based on a non-invasive temperature sensor system, a device for determining a performance of a non-invasive sensor system, a use of the device and a computer program with subject matter as described in the independent claims.

Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for simulation a determination of a temperature of a medium based on a non-invasive temperature sensor system, wherein the non-invasive temperature sensor system is located at an outside surface of a vessel wall surrounding the medium, the method comprising a first step of providing a set of first parameters of a medium-vessel system. A further step of providing a set of second parameters of the medium-vessel system. A further step of providing a temperature of the medium. A further step of simulating the determination of a calculated temperature of the medium based on the first set of parameters and the second set of parameters and the temperature of the medium. And a further step of outputting the calculated temperature of the medium.

The term vessel can include any kind of wall enclosing the medium, as for instance a tube, a pipe or a tank or container etc.

The set of fist parameters of the medium-vessel system include first parameters of the medium and/or the vessel. The system of second parameters of the medium-vessel system include first parameters of the medium and or the vessel.

The provided temperature of the medium can particularly be a nominal or an expected medium temperature.

The method for simulation a determination of a temperature of a medium based on a non-invasive temperature sensor system comprise a further step of outputting a difference of the calculated temperature of the medium and a nominal or expected temperature.

The medium can be any fluid including a liquid and/or gas and/or a bulk material or any mixture of these. The method enables a user to simulate a determination of the calculated temperature for control of a manufacturing process including the medium by a non-invasive temperature sensor system.

The set of first parameters can be parameters, which are stored and provided to the method when the method starts, e.g. as default values which can be used for the simulation at hand or can be modified. The set of first parameters may comprise a plurality of parameters relevant for the simulation of the temperature comprising at least one parameter.

The set of the second parameters can be parameters, which are requested to be input for the simulation from a user of the method and may comprise a plurality of parameters relevant for the simulation of the temperature comprising at least one parameter.

The non-invasive temperature measurement system can e.g. have the resistive temperature measurement device or a thermocouple as a temperature sensing element, wherein the temperature sensing element is electrically connected to a sensor electronics for provision of a temperature measurement reading. The temperature sensing system of the non-invasive temperature measurement system can be placed within a protection tube, which can be mounted non-invasively at an outer surface of the vessel.

For simulating the determination of the temperature of the medium, based on a non-invasive temperature sensor system, a model-based calculation can be used to determine the temperature of the medium based on the provided parameter sets.

The temperature of the medium can be a nominal, an expected, a minimum or a maximum temperature of the process, depending on the required task of the simulation. The calculated temperature of the medium can be compared to the temperature of the medium as provided.

At least as a first estimate, the nominal values of the medium properties and the phase state can be used for the determination of the temperature of the medium.

The type of a phase of the medium within the vessel may be a liquid and/or a gas and/or a steam and/or a multiphase.

The model-based calculation can be performed by a software tool that simulates the determination of the calculated temperature of the medium on the base of a provided temperature of the medium.

Using this method simulating the determination of the calculated temperature using a non-invasive temperature measurement system, can cost effectively enhance the confidence of existing measurements, of new invasive ones or even increase the confidence and application of non-invasive temperature sensors to run the process.

According to an aspect, the method comprises a further step of simulating the determination of a dynamic response of the non-invasive temperature sensor system. And a further step of outputting the dynamic response of the non-invasive temperature sensor system. The term dynamic response of the non-invasive temperature sensor system can include, e.g. a response time of the non-invasive temperature sensor system. It is known that based on the provided set of first parameters and second parameters a thermal network for a model-based compensation of dynamical effects can be set up. The thermal network can comprise thermal resistances and/or thermal masses and/or heat sources and/or reservoirs and/or other thermal relevant elements and the thermal network can be set up in analogous way as performed with electrical network modelling. It is well known that such a thermal network can be used to model, e.g., an accuracy and a dynamical response of a measurement system and a whole setup, e.g. with respect to temperature jumps or steps or other changes in time in the medium inside the pipe or tank or vessel.

The dynamic response can be used to assess the feasibility of a specific temperature measurement system and the thermal model can be used to improve the dynamical response of the readings of the temperature measurement system by appropriate signal processing.

That means, using this suitable extension of the method, the methods enables to simulate the dynamic response of the non-invasive sensor system in question.

According to an aspect the set of second parameters comprises properties of the vessel including a type of the material of the vessel wall and/or geometric dimensions of the vessel wall; and properties of the medium including: a type of the phase of the medium and/or a density of the medium and/or a dynamic viscosity of the medium and/or a velocity of the medium. These parameters can be provided by a user of the method.

A type of the material of the vessel can be broadly classified into metallic, plastic or layered materials. Dimensions of the vessel, like a wall thickness and/or an inner diameter may be selected from standard dimensions.

The type of a phase of the medium within the vessel may be a liquid and/or a gas and/or a steam and/or a multiphase.

The thickness and thermal conductivity of the insulation can be taken into account if applicable to the vessel. For definition of a location of the measurement point a nearest upstream feature like a bend and/or a valve and/or an orifice can be taken into account.

According to an aspect the set of first parameters comprise properties of the vessel including: a thermal conductivity of the wall of the vessel and/or a thickness of a paint covering the surface of the vessel and/or a thermal conductivity of the paint covering the surface of the vessel and/or a thickness of an insulation of the vessel and/or thermal conductivity of the insulation of the vessel and/or thermal conductivity resulting from convection and/or an ambient temperature of the vessel and/or a Prandtl number of the medium.

At least the part of these listed properties may be stored to be automatically provided to the method for a more comfortable use of the method, because at least some of these properties may be the same for a bunch of processes to be controlled by the non-invasive temperature sensor system.

According to an aspect, the determination of the temperature of the medium is model based, and the model includes a heat transfer characteristics of a boundary layer of the medium and/or a heat transfer characteristics of a segment of the vessel wall enclosing the medium. Using such a model to determine the temperature of the medium improves the accuracy of the determination.

According to an aspect, the model for determination of the temperature of the medium is described by the Formula 1:

$$T_M = T_{wa} \left[ 1 + \frac{R_{bl} + R_w}{R_F} \right] - T_e \frac{R_{bl} + R_w}{R_F} \quad (1)$$

wherein $T_m$ is a temperature of the medium; $T_{wa}$ is a temperature of a segment of the vessel wall; $T_e$ is a reference temperature of the non-invasive temperature measurement system; $R_{BL}$ is a thermal resistance of a boundary layer of the medium within the vessel; $R_W$ is a thermal resistance of the segment of the surface of the vessel; and $R_F$ is an approximation of the thermal resistance between the vessel wall's outer surface and the reference temperature measurement point. The thermal resistances can be derived from the collected application parameters.

A device for determining a performance of a non-invasive sensor system is proposed, wherein a non-invasive temperature sensor system is located at an outside surface of a vessel wall surrounding the medium, the device having a storage device for providing a set of first parameters of medium-vessel system and an input interface for requesting and/or receiving input from a user of the device:

a set of second parameters of the medium-vessel system and a temperature of the medium.

The device further includes a determination module configured to simulate a determination of a calculated temperature of the medium according one of the methods for simulation as described above, based on the first set of parameters and the second set of parameters and the nominal temperature and an output interface for displaying a simulation result of the determination module.

The temperature of the medium can be the nominal temperature of a process to be controlled.

According to an aspect, the determination module is configured to compare the temperature of the medium and the calculated temperature of the medium; and the output interface is configured to display a difference of the calculated temperature of the medium and the temperature of the medium. The determination module can be configured to output a response time prediction of the calculated temperature, if the nominal temperature changes, e.g. undergoes some step change.

According to an aspect the input interface is configured for requesting from a user a revised set of first parameters of the medium and/or the vessel and/or a revised set of second parameter of the medium and/or the vessel; and the determination module is configured to revise the simulation of the determination of the calculated temperature of the medium, based on the revised set of first parameters and the revised set of second parameters and the temperature of the medium.

The revised set of first parameters can overwrite the preset set of first parameters. An advanced option menu can be used to change the preset set of first parameters to study the effect of changing the parameters.

According to an aspect, the output interface is configured to display the result of the determination module in a graphical manner.

According to an aspect, the determination module is configured to identify at least one most relevant parameter of the simulation; and the output interface is configured to highlight and/or display in a graphical manner the most relevant parameter.

According to an aspect, the output interface is configured to highlight the most relevant parameter using a color-coding scheme.

According to an aspect, the input interface is configured to enable a user to input a revised parameter of the requested and/or displayed parameters and to initiate a revised simulation performed by the determination module based on the revised parameters and the not revised parameters.

According to an aspect, the determination module is configured to simulate a dynamic response of the non-invasive sensor system as described above when describing the method; and the output interface is configured to display a result of the dynamic response simulation.

A use of the device as described above, for simulating and/or validating a temperature control of a manufacturing process including the medium in a vessel is proposed.

According to another aspect a computer program, particularly an app, comprising instructions, which, when a computer system, particularly a computer system at a local platform and/or a web-based computer system, executes the program, cause the computer system to carry out one of the above described methods.

Such a computer program enables the use of the described method in different systems.

According to another aspect of the present invention, a computer-readable storage medium is disclosed on which the computer program is stored.

Brief description of the drawings

The accompanying drawings, which are included to provide a further understanding of the invention and are incorporated in and constitute a part of this application, illustrate embodiments of the invention and together with the description serve to explain the principle of the invention. The drawings display in:

Figure 1 the device generating results generated by the device presented in a graphical manner;

Figure 2 relevant parameters as simulated by the device with different regions of interest;

Figure 3 an example input interface with preset first parameters and with second parameters to be chosen by the user, for the simulation, having drop-down menu features that allow the user to set the parameters and modify the calculations accordingly;

Figure 4 a sketch of a graphical output interface indicating the simulation results; and

Figure 5 an example of an advanced input interface for setting up parameters for the simulation.

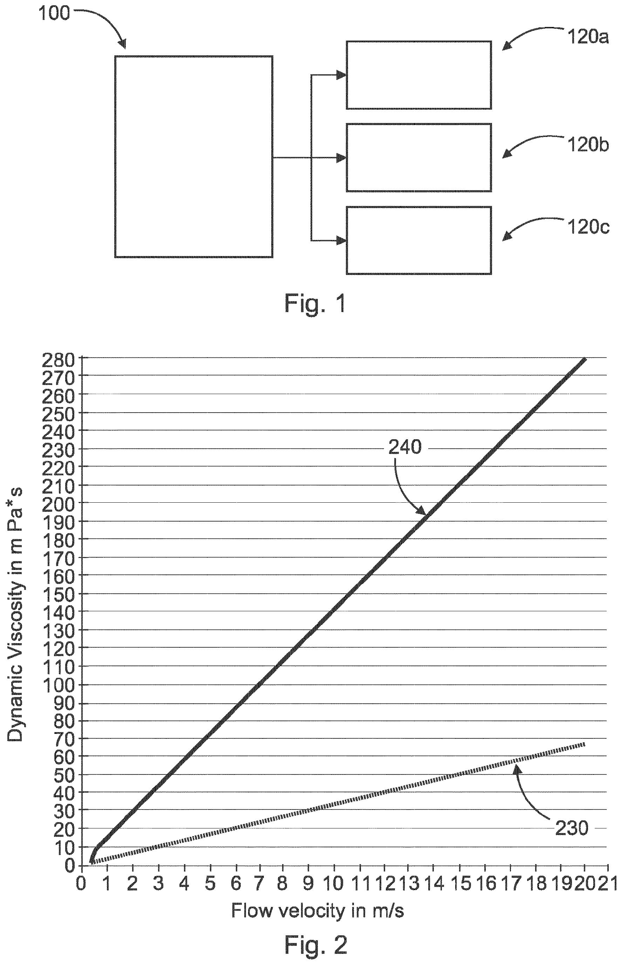

Figure 1 sketches schematically the device 100 for determining a performance of a non-invasive sensor system, wherein via an input interface (not shown here) for requesting and/or receiving input from a user of the device 100 at least a second set of parameters of the medium and the vessel together with the temperature of the medium is provided.

The device 100 simulates by means of a determination module a determination of a calculated temperature of the medium, which may be based on a set of first parameters and a set of second parameters and the temperature of the medium.

The output interface of the device 100 displays results 120a to 120c of the simulation of the determination module. If the difference between the temperature of the medium and the calculated temperature of the medium is below e.g. 2°C the output interface can display with a colour code 120a as for instance green, that using a non-invasive sensor system can be recommended. If the difference is below e.g. 4°C the output interface can display with a colour code 120b that it may be possible to find a solution to use the non-invasive sensor system. And by a colour code as e.g. red 120c the simulation result can be displayed by the output interface to indicate that the difference is above 4° C and can be combined with a message that research and development effort may be necessary to find a solution to use the non-invasive sensor system for process control.

Using other words, a simple rule can be put in place to give a subjective analysis of whether the difference between a nominal temperature of the medium and the calculated temperature of the medium is below a threshold of an acceptable error. Subsequently, a color-coding approach is used to highlight whether the difference is acceptable or not.

As an example, the difference may be set at +/- 1 % of the expected difference between the temperature of the medium and the calculated temperature of the medium. If the difference is less than 1%, the result can be highlighted as green. Between 1% and 3% the reside can be highlighted as yellow and larger than that is highlighted orange to signify that the difference is outside of an arbitrarily accepted threshold. The threshold may be variable. The user can change the default values and by way of a button request an update of the calculation results to be displayed.

The user can choose to contact the supplier of the tool or another partner, which has been defined by the supplier and choose to obtain a copy of the results as a report.

Figure 2 sketches a diagram, where on the x-axis, a velocity of the flow of the medium is shown and on the y-axis, a dynamic viscosity of the medium is shown. The first line 230 of figure 2 indicates an area of a condition of the medium between the line 230 and the x-axis where there is turbulence flow of the medium and an application of a non-invasive temperature sensor system can be recommended.

An interim area for the application of a non-invasive temperature sensor system is defined between a second line 240 and the first line 230 where application of the non-invasive temperature sensor system may be possible with additional support from the supplier.

And the region of the diagram between the second line 240 and the y-axis indicates the condition of the medium where research and development effort is recommended in case the non-invasive temperature sensor system should be used to control the process temperature. Such a diagram may be provided by the output interface of the device for determining the performance of a non-invasive sensor system.

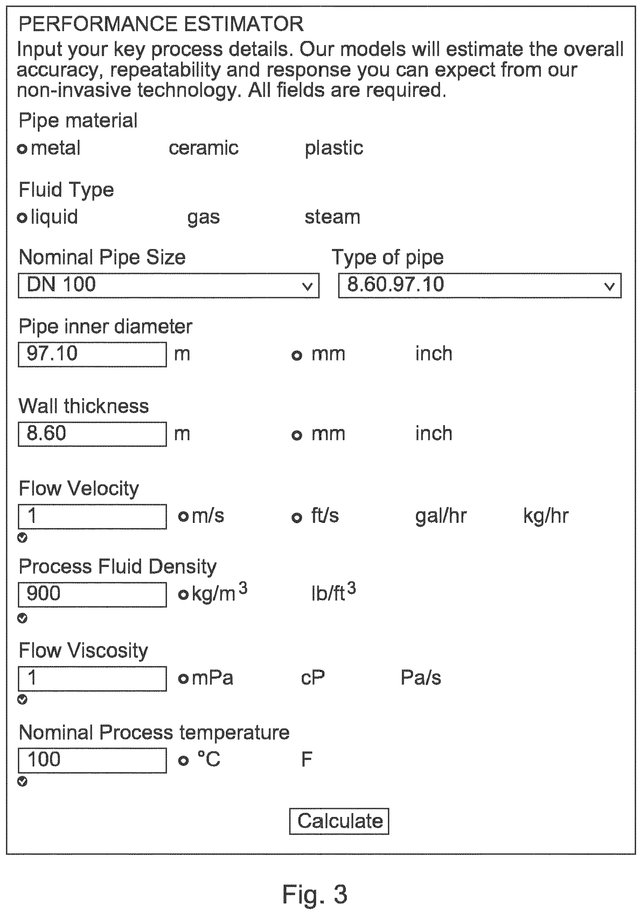

Figure 3 sketches as an example a graphical user interface of an input interface of the device 100 with preset set of first parameters and with second parameters to be chosen by the user for the simulation, having drop-down menu features that allow the user to set the parameters for the simulation and modify the calculations for the determination of the calculated temperature accordingly. Using the pre-set set of first parameters enables a user to simulate the determination of the calculated temperature as a first estimate easily.

An advanced option menu can be used to change the preset set of first parameters to study the effect of changing the related parameters.

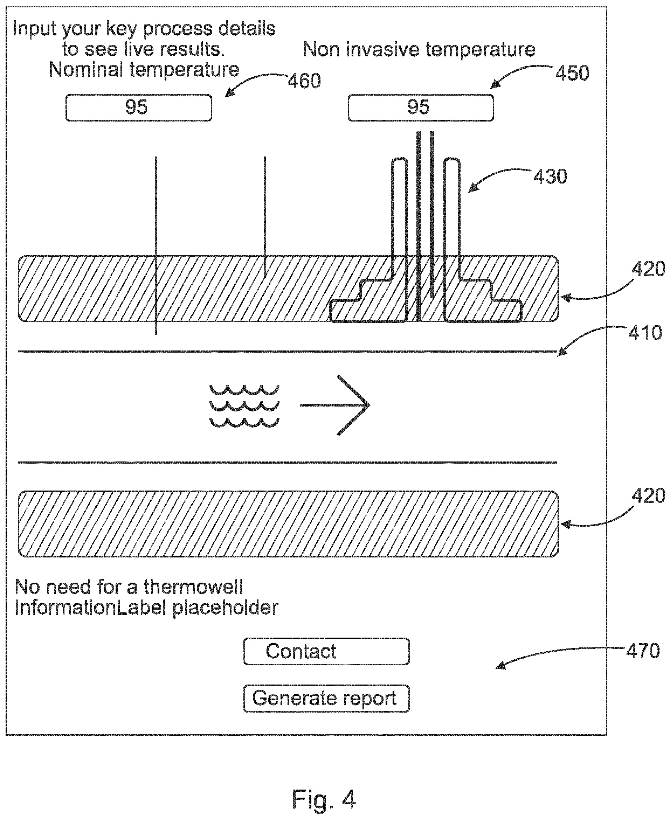

Figure 4 sketches a graphical output interface indicating the simulation results where the system with a tube 420, a non-invasive temperature sensor system 430 and the medium 410 is graphically represented with the indicated calculated temperature of the medium 450 and the nominal temperature of the medium 460 for easy comparison.

Functional areas on the graphical user interface of the output interface enable a user to generate a report or to contact a supplier.

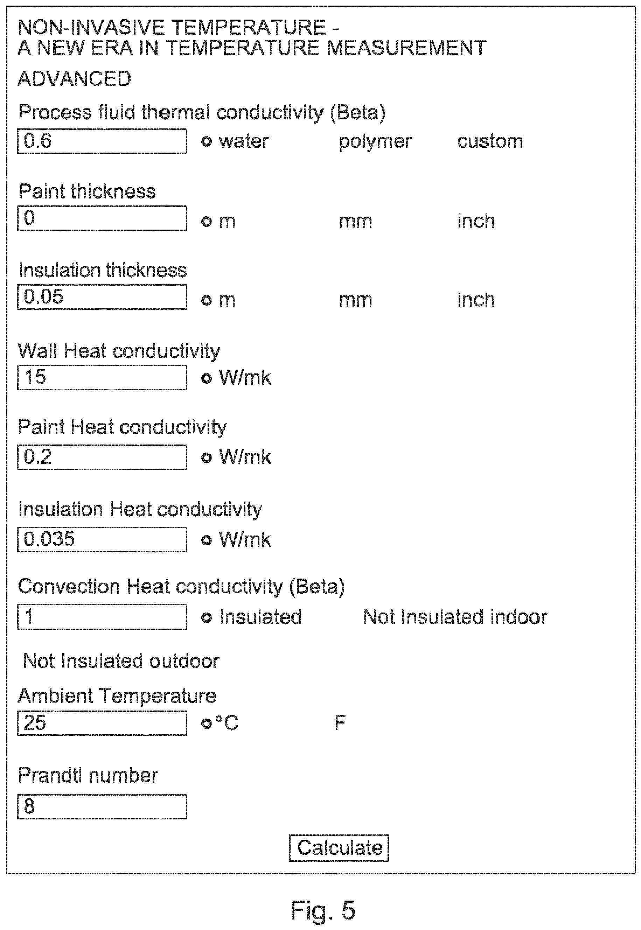

Figure 5 sketches as an example an advanced graphical user interface of an input interface of the device 100 for setting up parameters for the simulation by changing the set of first parameters before starting a new simulation calculation.

**Claims**

1.  A method for simulation a determination of a temperature of a medium (410) based on a non-invasive temperature sensor system (430), wherein the non-invasive temperature sensor system (430) is located at an outside surface of a vessel wall (420) surrounding the medium (410), the method comprising:

    providing a set of first parameters of a medium-vessel system;
    providing a set of second parameters of the medium-vessel system;
    providing a temperature of the medium (410);
    simulating the determination of a calculated temperature of the medium (410) based on the first set of parameters and the second set of parameters and the temperature of the medium (410); and
    outputting the calculated temperature of the medium (410).

2.  The method according to claim 1, wherein the method comprises:

    simulating the determination of a dynamic response of the non-invasive temperature sensor system (430); and
    outputting the dynamic response of the non-invasive temperature sensor system (430).

3.  The method according to one of the preceding claims, wherein the set of second parameters comprises:

    properties of the vessel including a type of the material of the vessel wall (420) and/or geometric dimensions of the vessel wall (420); and
    properties of the medium (410) including: a type of the phase of the medium (410) and/or a density of the medium (410) and/or a dynamic viscosity of the medium (410) and/or a velocity of the medium (410).

4.  The method according to one of the preceding claims, wherein the set of first parameters comprise properties of the vessel including: a thermal conductivity of the wall of the vessel (420) and/or a thickness of a paint covering the surface of the vessel and/or a thermal conductivity of the paint covering the surface of the vessel and/or a thickness of an insulation of the vessel and/or thermal conductivity of the insulation of the vessel and/or thermal conductivity resulting from convection and/or an ambient temperature of the vessel; and/or a Prandtl number of the medium (410).

5.  The method according to one of the preceding claims, wherein the determination of the temperature of the medium (410) is model based, and wherein the model includes a heat transfer characteristics of a boundary layer of the medium (410) and/or a heat transfer characteristics of a segment of the vessel wall enclosing the medium (410).

6.  A device (100) for determining a performance of a non-invasive sensor system (430), wherein a non-invasive temperature sensor system (430) is located at an outside surface of a vessel wall (420) surrounding the medium (410), comprising:

    a storage device for providing a set of first parameters of a medium-vessel system;
    an input interface for requesting and/or receiving input from a user of the device:

      a set of second parameters of the medium-vessel system;
      a temperature of the medium (410);

    the device (100) further comprising:

      a determination module configured to simulate a determination of a calculated temperature of the medium (410) according to one of the claims 1 to 5, based on a set of first parameters and a set of second parameters and the temperature of the medium (410); and
      an output interface for displaying a simulation result of the determination module.

7.  The device (100) according to claim 6, wherein the determination module is configured to compare the temperature of the medium (410) and the calculated temperature of the medium; and the output interface is configured to display a difference of the calculated temperature of the medium (410) and the nominal temperature of the medium (410).

8.  The device (100) according to claim 6 or 7, wherein the input interface is configured for requesting from a user a revised set of first parameters and/or a revised set of second parameters of the medium (410) and/or the vessel; and the determination module is configured to revise the simulation of the determination of the calculated temperature of the medium (410), based on the revised set of first parameters and the revised set of second parameters and the temperature.

9. The device (100) according to one of claims 6 to 8, wherein the output interface is configured to display the result of the determination module in a graphical manner.

10. The device (100) according to one of claims 6 to 9, wherein the determination module is configured to identify at least one most relevant parameter of the simulation; and the output interface is configured to highlight and/or display in a graphical manner the most relevant parameter.

11. The device (100) according to one of claims 6 to 10, wherein the output interface is configured to highlight the most relevant parameter using a color-coding scheme.

12. The device (100) according to one of claims 6 to 11, wherein the input interface is configured to enable a user to input a revised parameter of the requested and/or displayed parameters and to initiate a revised simulation performed by the determination module based on the revised parameters and the not revised parameters.

13. The device (100) according to one of claims 6 to 12, wherein the determination module is configured to simulate a dynamic response of the non-invasive sensor system (430) according to claim 2; and the output interface is configured to display a result of the dynamic response simulation.

14. Use of the device (100) according to one of claims 6 to 13, for simulating and/or validating a temperature control of a manufacturing process including the medium (410) in a vessel.

15. A computer program, particularly an app, comprising instructions, which, when a computer system, particularly a computer system at a local platform and/or a web-based computer system, executes the program, cause the computer system to carry out the method according to claims 1 to 5.

Fig. 1

Fig. 2

## PERFORMANCE ESTIMATOR

Input your key process details. Our models will estimate the overall accuracy, repeatability and response you can expect from our non-invasive technology. All fields are required.

Pipe material

◉ metal          ceramic          plastic

Fluid Type

◉ liquid          gas          steam

Nominal Pipe Size                                  Type of pipe

| DN 100 ∨ | 8.60.97.10 ∨ |

Pipe inner diameter

| 97.10 | m          ◉ mm          inch

Wall thickness

| 8.60 | m          ◉ mm          inch

Flow Velocity

| 1 | ◉ m/s          ◉ ft/s          gal/hr          kg/hr

Process Fluid Density

| 900 | ◉ kg/m$^3$          lb/ft$^3$

Flow Viscosity

| 1 | ◉ mPa          cP          Pa/s

Nominal Process temperature

| 100 | ◉ °C          F

| Calculate |

Fig. 3

Input your key process details
to see live results.
Nominal temperature

Non invasive temperature

460

450

95

95

430

420

410

420

No need for a thermowell
InformationLabel placeholder

Contact

470

Generate report

Fig. 4

NON-INVASIVE TEMPERATURE -
A NEW ERA IN TEMPERATURE MEASUREMENT

ADVANCED

Process fluid thermal conductivity (Beta)

| 0.6 | o water polymer custom |

Paint thickness

| 0 | o m mm inch |

Insulation thickness

| 0.05 | o m mm inch |

Wall Heat conductivity

| 15 | o W/mk |

Paint Heat conductivity

| 0.2 | o W/mk |

Insulation Heat conductivity

| 0.035 | o W/mk |

Convection Heat conductivity (Beta)

| 1 | o Insulated Not Insulated indoor |

Not Insulated outdoor

Ambient Temperature

| 25 | o °C F |

Prandtl number

| 8 |

| Calculate |

Fig. 5

Europäisches
Patentamt

European
Patent Office

Office européen
des brevets

# EUROPEAN SEARCH REPORT

Application Number

EP 20 21 1680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEBHARDT JÖRG ET AL: "Abstract", TM - TECHNISCHES MESSEN/PLATTFORM FÜR METHODEN, SYSTEME UND ANWENDUNGEN DER MESSTECHNIK, [Online] vol. 87, no. 9, 25 September 2020 (2020-09-25), pages 553-563, XP055806729, DE ISSN: 0171-8096, DOI: 10.1515/teme-2020-0028 Internet Retrieved from the Internet: URL:http://dx.doi.org/10.1515/teme-2020-0028> [retrieved on 2021-05-21] * the whole document * ----- | 1-15 | INV. G01K1/143 G01K7/42 G01K13/02 G01K15/00 G06F30/20 |

TECHNICAL FIELDS
SEARCHED      (IPC)

G01K
G06F
G06Q

The present search report has been drawn up for all claims

| Place of search | Date of completion of the search | Examiner |
|---|---|---|
| The Hague | 22 May 2021 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)